Europäisches Patentamt

European Patent Office

Office européen des brevets

(19)

(11) Veröffentlichungsnummer: **0 311 762 B1**

(12) **EUROPÄISCHE PATENTSCHRIFT**

(45) Veröffentlichungstag der Patentschrift:
17.07.91 Patentblatt 91/29

(51) Int. Cl.$^5$: **F16K 11/074**

(21) Anmeldenummer: **88112446.5**

(22) Anmeldetag: **01.08.88**

(54) **Mischbatterie.**

(30) Priorität: **01.10.87 CH 3827/87**

(43) Veröffentlichungstag der Anmeldung:
**19.04.89 Patentblatt 89/16**

(45) Bekanntmachung des Hinweises auf die
Patenterteilung:
**17.07.91 Patentblatt 91/29**

(84) Benannte Vertragsstaaten:
**AT CH DE FR IT LI**

(56) Entgegenhaltungen:
**CH-A- 651 119
CH-A- 654 088
FR-A- 2 434 980
US-A- 4 681 141**

(73) Patentinhaber: **KWC AG
Hauptstrasse 130
CH-5726 Unterkulm (CH)**

(72) Erfinder: **Graber, Heinz
Winkelweg 514
CH-5727 Oberkulm (CH)**

(74) Vertreter: **Patentanwälte Schaad, Balass &
Partner
Dufourstrasse 101 Postfach
CH-8034 Zürich (CH)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft eine Mischbatterie gemäss dem Oberbegriff des Patentanspruches 1.

Bekannte Mischbatterien der genannten Art, insbesondere sogenannte Einhebel-Mischbatterien, beispielsweise nach den CH-A-651 119 oder CH-A-654 088 bringt man durch eine translatorische Verschiebung des Drehschiebers bezüglich den Einlässen und/oder des Auslasses der Mischbatterie in Schliessstellung, weil dann die Durchlässe im Drehschieber nicht mehr mit den Einlässen bzw. dem Auslass kommunizieren. Diese Bauweise, bei der der Drehschieber die Form einer Scheibe hat (vorzugsweise aus einem Hartstoff wie Keramik) und dicht an einer Gegenscheibe mit zwei Einlassöffnungen und einer Auslassöffnung anliegt, hat sich vor allem deswegen bewährt, weil der Drehschieber in Schliesslage sich nicht überbeanspruchen lässt. Allerdings ist diese vorteilhafte Bauweise mit einem relativ komplizierten und schwergängigen Aufbau erkauft worden.

Zum einen muss der Drehschieber ungeachtet seiner Stellung stets sauber dichtend an der Gegenscheibe anliegen, was nur dann gewährleistet ist, wenn der Drehschieber sehr genau plan bearbeitet ist und stets mit einer gewissen Andrückkraft an die Gegenscheibe gedrückt ist, weswegen diese Bauweise auch als relativ schwergängig zu bezeichnen ist. Zum anderen muss der einzige Bedienungshebel um zwei etwa rechtwinklig zueinander stehende Schwenkachsen verdrehbar bzw. verschwenkbar sein. Normalerweise bestimmt die Verdrehung des Bedienungshebels um die Achse der Mischbatterie die relative Verdrehungslage des Drehschiebers inbezug auf die Einlässe zur Mischbatterie und damit das Mischungsverhältnis des den Auslass verlassenden Wassers. Das Ausmass der Verschwenkung des Bedienungshebels dagegen um die zur Achse der Mischbatterie rechtwinklige Schwenkachse bestimmt die Durchflussmenge, d.h. den Öffnungsgrad der Mischbatterie.

Es gibt nun zahlreiche Anwendungen, bei denen die Regulierbarkeit der Durchflussmenge gar nicht gefordert wird, sondern nur die Regulierbarkeit des Mischungsverhältnisses und eine leichte Bedienbarkeit.

Weiter ist aus der FR-A-24 34 980 eine Mischbatterie bekannt, bei welcher der Zufluss von Kalt- und von Warmwasser mittels eines Mischventils gegensinnig gesteuert und der Durchfluss durch das Mischventil mittels eines Servoventils unterbunden wird. Das membranförmige Schliessteil des Servoventils wirkt mit einem Sitz zusammen, der bezüglich dem Schliessteil auf der vom Mischventil abgewandten Seite vorgesehen ist.

Eine weitere Mischbatterie, bei welcher der Durchfluss des Wassers durch das Mischventil mittels eines Servoventils unterbunden wird, ist aus der US-A-46 81 141 bekannt. Dabei sind das Servoventil und das Mischventil in zwei separaten, miteinander strömungsverbundenen Ausnehmungen im Gehäuse der Mischbatterie vorgesehen und der Sitz des Schliessteils des Servoventils ist am Gehäuse ausgebildet.

Es ist daher die Aufgabe der Erfindung, eine Mischbatterie der eingangs genannten Art zu schaffen, die bei einfachem und kompaktem Aufbau und unter Beibehaltung der Vorteile der bekannten Mischbatterien (keine Überbeanspruchung des Drehschiebers in Schliesslage) besonders leicht zu betätigen ist und die in jedem Fall "sanft" öffnet und vor allem schliesst, so dass Druckspitzen in den Zuführleitungen vermieden werden können.

Diese Aufgabe wird von der vorgeschlagenen Mischbatterie dadurch gelöst, dass sie die Merkmale des Kennzeichens des Patentanspruches 1 aufweist. Durch die Verwendung eines Servoventils ist es der in den Zuführleitungen zur Mischbatterie anstehende, in der Regel konstante Druck, der die Schliesskraft des Schliessteils auf dem als Sitz ausgebildeten Drehschieber bestimmt. Ausserdem gewährleistet die Verwendung eines Servoventils dank der ihm innewohnenden Eigenschaften (vergleichsweise zögerndes Oeffnen und Schliessen) in jedem Falle die Vermeidung von Druckspitzen in den Zuführleitungen.

Bevorzugte Ausführungsformen sind in den abhängigen Ansprüchen umschrieben.

Nachstehend ist rein beispielsweise eine Ausführungsform der vorgeschlagenen Mischbatterie anhand der Zeichnung näher beschrieben.

Es zeigt:

| | |
|---|---|
| Fig. 1 | einen vereinfachten Längsschnitt durch die hier interessierenden Teile einer Mischbatterie, und |
| Fig. 2, 3 sowie 4 | Draufsichten von der Ebene A-A der Fig 1 aus gesehen auf den Drehschieber mit darunter liegender Gegenscheibe in verschiedenen Verdrehungslagen. |

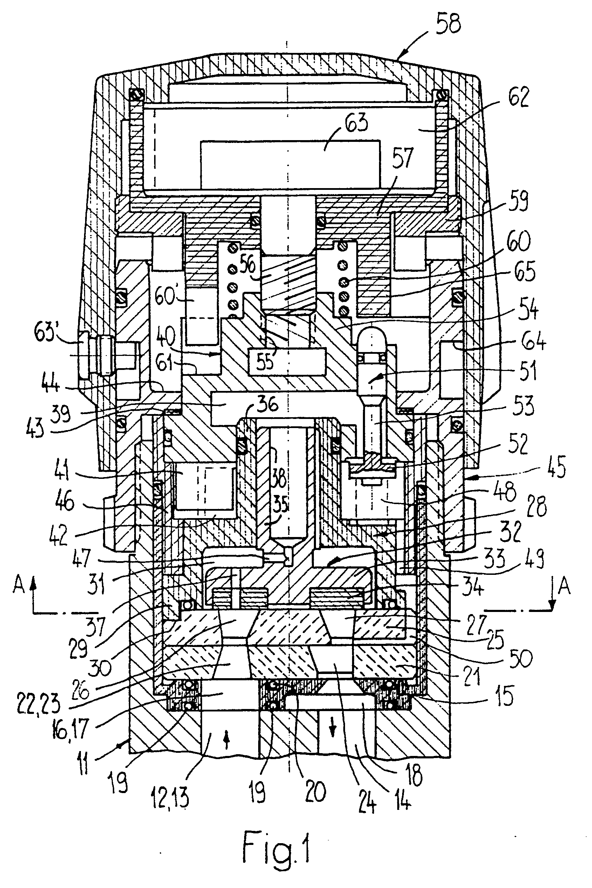

Bei der in Fig. 1 dargestellten Mischbatterie 10 erkennt man einen Stutzen 11, in dem zwei in Fig. 1 für den Betrachter hintereinander angeordnete Einlässe 12, 13 (für Kalt- bzw. Warmwasser) sowie ein Auslass 14 ausgebildet sind. In den Stutzen 11 ist eine becherförmige Patrone 15 eingelassen, deren Boden mit den Einlässen 12, 13 und dem Auslass 14 kommunizierende Durchlässe 16, 17 und 18 aufweist, die gegeneinander und zum Stutzen 11 hin mittels Dichtungen 19 abgedichtet sind. Im Inneren der Patrone 15 liegt auf deren

EP 0 311 762 B1

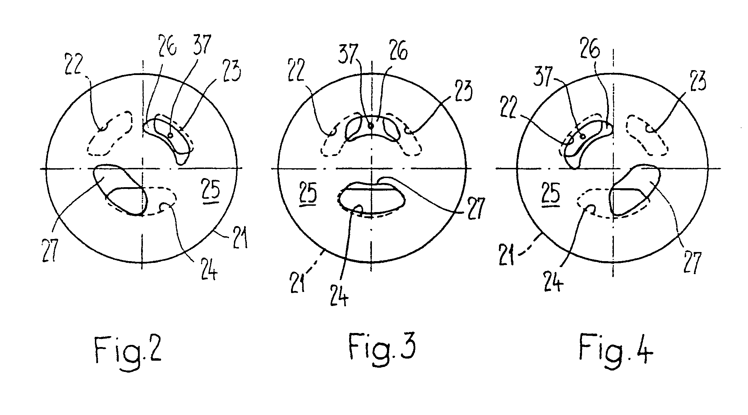

Boden und mittels Dichtungen 20 abgedichtet eine Gegenscheibe 21 an. Diese Gegenscheibe 21 weist zwei Einlassöffnungen 22, 23 (vergleiche auch Fig. 2-4) auf, sowie eine Auslassöffnung 24. Die vorzugsweise aus einem Hartstoff, beispielsweise Keramik, bestehende Gegenscheibe 21 sitzt unverdrehbar in der Patrone 15 und wirkt mit einem scheibenförmigen Drehschieber 25 zusammen, der einen einlasseitigen Durchlass 26 und einen auslasseitigen Durchlass 27 aufweist.

Auf der der Gegenscheibe 21 abgekehrten Seite des Drehschiebers 25 liegt dichtend eine Mitnehmerglocke 28 an, deren unterer Rand mit Vorsprüngen 29 versehen ist, die in gegengleich geformte Kerben 30 im Umfangsbereich des Drehschiebers 25 greifen. Die somit bezüglich des Drehschiebers 25 drehfeste Mitnehmerglocke 28 begrenzt eine erste Kammer 31, in der ein Schliessteil 32 eines (wie sich noch zeigen wird) Servoventils angeordnet ist, wobei der Sitz dieses Schliessteils 32 durch die der Gegenscheibe 21 abgekehrte Scheibe des Drehschiebers 25 gebildet ist.

Das Schliessteil 32 besteht aus einem Ventilteller 33, in dem eine die Durchlässe 26, 27 im Drehschieber 25 abdeckende Dichtung 34 eingelassen ist.

Der Ventilteller 33 ist einstückig mit einem im wesentlichen zylindrischen Schaft 35 versehen, der seinerseits längsverschiebbar, jedoch nicht verdrehbar in der Bohrung eines an der Mitnehmerglocke 28 angeformten Ansatzes 36 gelagert ist.

Im Bereich des einlasseitigen Durchlasses 26 ist die Dichtung 34 und der Ventilteller 33 von einer ersten Drosselöffnung 37 durchsetzt. Ueber diese Drosselöffnung ist somit die eine oder die andere oder beide Einlassöffnungen 22, 23 stets mit der ersten Kammer 31 verbunden. Dazu ist auch auf die Fig. 2-4 zu verweisen, in denen die Bezugslage der ersten Drosselöffnung relativ zum einlasseitigen Durchlass 26 eingezeichnet ist.

Der Schaft 35 ist mit einer Sackbohrung 38 versehen, die sich in eine weitere Kammer 39 hin öffnet, die in einer Mitnehmerhülse 40 ausgebildet ist. Diese Mitnehmerhülse 40 greift mit klauenartigen Vorsprüngen 41 in Lücken zwischen vom Ansatz 36 seitlich abstehende Vorsprünge 42 der Mitnehmerglocke 28 ein, so dass die Mitnehmerhülse 40 und die Mitnehmerglocke 28 drehfest aneinander gekoppelt sind.

Axial niedergehalten ist die Mitnehmerhülse 40 über eine Gleitringdichtung 43 durch eine nach innen ragende Schulter 44 eines Gewinderinges 45, der auf das obere Ende des Stutzens 11 aufgeschraubt ist. Die auf die Mitnehmerhülse 40 wirkende Niederhaltekraft wird mittels eines Distanzstückes 46 auch an die Mitnehmerglocke 28 übertragen.

Von der Kammer 31 geht eine zweite, den Fuss des Schaftes 35 durchsetzende und in die Sackbohrung 38 führende Drosselöffnung 47 aus. Zwischen der Mitnehmerhülse und der Mitnehmerglocke ist ein Ringraum 48 vorhanden, der über im Distanzstück 46 und im Drehschieber 25 vorhandene Kanäle 49 bzw. 50 mit dem auslasseitigen Durchlass 27 in Verbindung steht.

Die Kammer 39 und der Ringraum 48 sind durch ein in Schliessrichtung vorgespanntes Pilotventil 51 miteinander verbindbar. Dieses weist ein Schliessteil 52 auf, das an einem Stössel 53 befestigt ist. Der Stössel 53 ist in einer seitlichen Bohrung (ohne Bezugsziffer) in der Mitnehmerhülse 40 verschiebbar gelagert.

Die Mitnehmerhülse 40 besitzt einen Kopfteil 54, der von einer zentralen Gewindebohrung 55 mit einem ein- oder mehrgängigen Innengewinde mit einer sehr hohen Steigung durchsetzt ist. In diese Gewindebohrung 55 greift ein Gewindestift 56 mit einem entsprechenden Aussengewinde. Dieser Gewindestift 56 ist drehbar, jedoch axial nicht verschiebbar in einer zentralen Bohrung (ohne Bezugsziffer) eines Schalenteils 57 gelagert, das seinerseits mittels eines in einer Griffkappe 58 eingeschraubten Gewinderinges 59 in der Kappe 58 festgeklemmt ist. Das Schalenteil 57 ist einerseits über eine Druckfeder 60 am Kopfteil 54 der Mitnehmerhülse 40 abgestützt und andererseits mittels klauenartigen Zähnen 60', die in am Kopfteil 54 ausgebildete Kerben 61 greifen, drehfest an die Mitnehmerhülse 40 gekoppelt.

Die Griffkappe 58 und das Schalenteil 57 begrenzen eine Kammer 62, in welcher ein hier nur schematisch gezeigter und durch den Gewindestift 56 betätigter Mechanismus 63 angeordnet sein kann, auf dessen Funktion noch zurückzukommen sein wird.

Damit die Griffkappe 58 zusammen mit dem Schalenteil 57 nicht durch die Druckfeder 60 abgehoben wird, ist die Griffkappe 58 durch einen seitlich eingeschraubten Gewindestift 63', der in eine aussen am Gewindering 45 ausgebildete Umfangsnut 64 greift, gesichert. Diese Umfangsnut hat eine ausreichende Höhe, damit die Griffkappe 58 und die an dieser festgeklemmten Teile gegen die Wirkung der Feder 60 um ein bestimmtes Mass eingedrückt werden können.

Die Wirkungsweise der in Fig. 1 gezeigten Mischbatterie ist wie folgt :

In der dargestellten Schliesslage steht in der Kammer 39 der gleiche Druck an, der am einlasseitigen Durchlass 26 ansteht. Dieser Druck übt auf die gesamte Querschnittsfläche des Schaftes 35 einen ausreichenden Druck aus, um das Schliessteil 32 in Schliesslage zu halten. Wäre der Ventilteller 33 umfangsseitig gegen die Innenwand der Kammer 31 abgedichtet (was durchaus möglich ist), wäre die Schliesskraft noch durch den Druck erhöht, der auf die der Dichtung 34 abgekehrte Ringfläche des Ventiltellers 33 wirkt.

Durch Druck auf die Griffkappe 58 verschiebt sich diese zusammen mit dem Schalenteil 57 nach unten

3

gegen die Wirkung der Feder 60. Dabei drückt ein am Schalenteil 57 angeformter Fortsatz 65 den Stössel 53 des Pilotventils 51 in die Offenlage. Der Druck in der Kammer 39 entlädt sich über die Kanäle 49, 50 in den auslassseitigen Durchlass 27, wodurch die auf den Schaft 35 wirkende Schliesskraft nachlässt, so dass der Ventilteller 33 angehoben wird. Dem Auslass 14 entströmt somit Wasser, dessen Mischungsverhältnis von der relativen Verdrehungslage des Drehschiebers 25 inbezug auf die Gegenscheibe abhängt.

Sobald das Pilotventil 51 wieder geschlossen wird, baut sich nach Massgabe der Durchflussmenge durch die Drosselöffnungen 37, 47 in der Kammer 39 der einlasseitige Druck wieder auf, wodurch die Schliesskraft wieder auf den Schaft 35 zu wirken beginnt.

Wenn die Griffkappe 58 gedrückt wird, dann wird auch der Gewindestift 56 in die Gewindebohrung 55 gedrückt, so dass sich der Gewindestift 56 dreht. Der Mechanismus 63 kann nun ein durch den Gewindestift 56 aufziehbares Uhrwerk sein, das den Gewindestift 56 während einer gewissen Zeit auch unter der Wirkung der Feder 60 nicht zurückdrehen lässt, und erst nach Ablauf dieser Zeit wieder frei gibt. Dadurch ist es möglich, die Mischbatterie durch einmaliges Antippen der Griffkappe 58 zu öffnen und für eine am Uhrwerk einzustellende Zeit in Offenstellung zu halten.

Andererseits kann der Mechanismus 63 auch durch ein bistabiles Federhebelwerk gebildet sein, das den Gewindestift 56 nach dem ersten Drücken der Griffkappe 58 in eingedrehter Stellung arretiert und erst nach einem zweiten Drücken der Griffkappe 58 wieder freigibt.

Es ist ferner auch möglich, das Pilotventil 51 hydraulisch oder pneumatisch durch Fernbedienung zu betätigen, beispielsweise dadurch, dass mit einem zusätzlichen Druckimpuls der Druck in der Kammer 39 über den ohnehin anstehenden Druck soweit erhöht wird, dass die auf das Schliessteil 52 in Schliessrichtung wirkende Federkraft überwunden wird.

**Patentansprüche**

1. Mischbatterie mit einem den Zufluss von Kalt- und von Warmwasser gegensinnig steuernden Drehschieber (25) und mit Mitteln (32), um den Durchfluss durch den Drehschieber (25) zu unterbinden, dadurch gekennzeichnet, dass die genannten Mittel durch das Schliessteil (32) eines Servoventils gebildet sind, und dass der Drehschieber (25) als Sitz für dieses Schliessteil (32) ausgebildet ist.

2. Mischbatterie nach Patentanspruch 1, dadurch gekennzeichnet, dass der Drehschieber (25) drehfest an eine Mitnehmerglocke (28) gekoppelt ist, deren Innenraum eine gegen den Drehschieber (25) abgedichtete Kammer (31) bildet, in der das Schliessteil (32) angeordnet ist und die über eine erste Drosselöffnung (37) mit dem einlasseitigen Durchlass (26) des Drehschiebers (25) in Verbindung steht und die über eine weitere Drosselöffnung (47) mit einer weiteren Kammer (39) in Verbindung steht, die ihrerseits über ein Pilotventil (51) des Servoventils und über Kanäle (49, 50) mit dem auslasseitigen Durchlass (27) des Drehschiebers (25) verbindbar ist.

3. Mischbatterie nach Patentanspruch 2, dadurch gekennzeichnet, dass das Schliessteil (32) des Servoventils eine Membrane ist, in der die erste Drosselöffnung (37) ausgebildet ist.

4. Mischbatterie nach Patentanspruch 2, dadurch gekennzeichnet, dass das Schliessteil (32) ein mit einer Dichtung (34) und mit einem Ventilschaft (35) versehener Ventilteller (33) ist, dessen Schaft (35) längsverschiebbar jedoch unverdrehbar in der Mitnehmerglocke (28) gelagert ist.

5. Mischbatterie nach Patentanspruch 4, dadurch gekennzeichnet, dass die erste Drosselöffnung (37) im Ventilteller (33) ausgebildet ist und dass der Ventilschaft (35) eine in die weitere Kammer (39) ausmündende Sackbohrung (38) aufweist, in welche die zweite Drosselöffnung (47) führt.

6. Mischbatterie nach einem der Patentansprüche 2 bis 5, dadurch gekennzeichnet, dass das Pilotventil (51) ein in Schliesslage vorgespanntes Schliessteil (52) besitzt.

7. Mischbatterie nach Patentanspruch 6, dadurch gekennzeichnet, dass das Schliessteil (52) des Pilotventils (51) an einem Stössel (53) befestigt ist, der verschiebbar in einer Bohrung in einer Kupplungshülse (40) gelagert ist, die ihrerseits drehfest an die Mitnehmerglocke (28) gekuppelt ist.

8. Mischbatterie nach Patentanspruch 7, dadurch gekennzeichnet, dass ein bezüglich der Kupplungshülse (40) unverdrehbarer, jedoch axial gegen die Wirkung einer Rückstellfeder (60) verschiebbarer Handgriff (58) vorgesehen ist, mit dem durch Verdrehung der Drehschieber (25) verdrehbar ist und durch Drücken das Pilotventil (51) betätigbar ist.

9. Mischbatterie nach einem der Patentansprüche 2 bis 8, dadurch gekennzeichnet, dass ein Zeitglied (63) vorgesehen ist, welches die Rückkehr des Pilotventils (51) in seine Schliesslage verzögert.

10. Mischbatterie nach den Patentansprüchen 8 und 9, dadurch gekennzeichnet, dass das Zeitglied (63) im Handgriff (58) eingebaut ist.

11. Mischbatterie nach Patentanspruch 8, dadurch gekennzeichnet, dass die Verdrehbarkeit des Handgriffes (58) durch Anschläge begrenzt ist.

12. Mischbatterie nach Patentanspruch 8, dadurch gekennzeichnet, dass zwischen dem Handgriff (58) und dem Stössel (53) des Pilotventils (51) ein bistabiles Federhebelwerk vorgesehen ist, so dass das Pilotventil (51) beim ersten Drücken in Offenstellung und beim zweiten Drücken wieder in Schliessstellung bringbar ist.

## Claims

1. Mixing valve, having a rotary slide valve (25) controlling the inflow of cold and hot water in opposite directions, and having means (32) to interrupt the through-flow through the rotary slide valve (25), characterised in that the said means are formed by the closure part (32) of a servo valve, and in that the rotary slide valve (25) is constructed as a seat for this closure part (32).

2. Mixing valve according to Patent Claim 1, characterised in that the rotary slide valve (25) is coupled fixedly in terms of rotation to a carrier dome (28), the interior of which forms a chamber (31) which is sealed off against the rotary slide valve (25), in which chamber the closure part (32) is arranged and which is in connection via a first throttle aperture (37) to the inlet-side passage (26) of the rotary slide valve (25) and which is connection via a further throttle aperture (47) to a further chamber (39) which, in turn, can be connected via a pilot valve (51) of the servo valve and via channels (49, 50) to the outlet-side passage (27) of the rotary slide valve (25).

3. Mixing valve according to Patent Claim 2, characterised in that the closure part (32) of the servo valve is a diaphragm, in which the first throttle aperture (37) is constructed.

4. Mixing valve according to Patent Claim 2, characterised in that the closure part (32) is a valve disk (33) which is provided with a seal (34) and with a valve shaft (35), which shaft (35) is mounted so as to be longitudinally displaceable, but non-rotatable in the carrier dome (28).

5. Mixing valve according to Patent Claim 4, characterised in that the first throttle aperture (37) is constructed in the valve disk (33), and in that the valve shaft (35) has a blind bore (38) opening out into the further chamber (39), into which blind bore the second throttle aperture (47) leads.

6. Mixing valve according to one of Patent Claims 2 to 5, characterised in that the pilot valve (51) has a closure part (52) which is prestressed in the closure position.

7. Mixing valve according to Patent Claim 6, characterised in that the closure part (52) of the pilot valve (51) is attached to a tappet (53) which is mounted so as to be displaceable in a bore in a coupling sleeve (40) which, in turn, is coupled fixedly in terms of rotation to the carrier dome (28).

8. Mixing valve according to Patent Claim 7, characterised in that a handle (58) is provided which is non-rotatable in relation to the coupling sleeve (40) but is axially displaceable counter to the effect of a restoring spring (60), by rotation of which handle the rotary slide valve (25) can be rotated, and by pressing of which handle the pilot valve (51) can be actuated.

9. Mixing valve according to one of Patent Claims 2 to 8, characterised in that a time member (63) is provided which delays the return of the pilot valve (51) to its closure position.

10. Mixing valve according to Patent Claims 8 and 9, characterised in that the time member (63) is built into the handle (58).

11. Mixing valve according to Patent Claim 8, characterised in that the rotatability of the handle (58) is limited by stops.

12. Mixing valve according to Patent Claim 8, characterised in that a bistable spring lever gear is provided between the handle (58) and the tappet (53) of the pilot valve (51) so that, upon first pressing, the pilot valve (51) can be brought into the open position and, upon second pressing, it can be brought into the closed position again.

## Revendications

1. Robinet mitigeur comprenant un tiroir rotatif (25) contrôlant l'arrivée d'eau froide et l'arrivée d'eau chaude par des rotations en sens contraire, ainsi que des moyens (32) pour empêcher l'écoulement à travers le tiroir rotatif (25), caractérisé en ce que lesdits moyens sont formés par l'obturateur (32) d'une servovalve et que le tiroir rotatif (25) est réalisé comme un siège pour cet obturateur (32).

2. Robinet mitigeur selon la revendication 1, caractérisé en ce que le tiroir rotatif (25) est accouplé en rotation à une cloche d'entraînement (28) dont l'espace intérieur forme une chambre (31), rendue étanche vis-à-vis du tiroir rotatif (25), chambre dans laquelle est disposé l'obturateur (32) et qui communique par un premier orifice d'étranglement (37) avec la lumière (26) côté arrivée du tiroir rotatif (25) et par un orifice d'étranglement supplémentaire (47) avec une chambre supplémentaire (39), pouvant elle-même être reliée au moyen d'une soupape pilote (51) de la servovalve et à travers des canaux (49, 50), à une lumière (27) côté sortie du tiroir rotatif (25).

3. Robinet mitigeur selon la revendication 2, caractérisé en ce que l'obturateur (32) de la servovalve est une membrane dans laquelle est formé le premier orifice d'étranglement (37).

4. Robinet mitigeur selon la revendication 2, caractérisé en ce que l'obturateur (32) est constitué d'une tête en forme de disque (33), pourvue d'un joint (34) et d'une tige (35) montée axialement coulissante mais sans rotation possible dans la cloche d'entraînement (28).

5. Robinet mitigeur selon la revendication 4, caractérisé en ce que le premier orifice d'étranglement (37) est formé dans la tête d'obturateur (33) et que la tige (35) de l'obturateur présente un perçage borgne (38) s'ouvrant dans la chambre supplémentaire (39) et dans lequel débouche le second orifice d'étranglement (47).

6. Robinet mitigeur selon une des revendications 2 à 5, caractérisé en ce que la soupape pilote (51) possède une partie obturatrice (52) qui est précontrainte à la position de fermeture.

7. Robinet mitigeur selon la revendication 6, caractérisé en ce que la partie obturatrice (52) de la soupape pilote (51) est fixée à un poussoir (53) monté coulissant dans un perçage d'une douille d'accouplement (40) qui est elle-même accouplée en rotation à la cloche d'entraînement (28).

8. Robinet mitigeur selon la revendication 7, caractérisé en ce qu'il comprend un bouton de commande (58) qui ne peut pas être tourné par rapport à la douille d'accouplement (7), mais est déplaçable axialement par rapport à elle, contre l'action d'un ressort de rappel (60), bouton dont la rotation fait tourner le tiroir rotatif (25) et sur lequel on peut appuyer, ce qui actionne la soupape pilote (51).

9. Robinet mitigeur selon une des revendications 2 à 8, caractérisé en ce qu'il comprend un organe temporisateur (63) qui retarde le retour de la soupape pilote (51) à sa position fermée.

10. Robinet mitigeur selon les revendications 8 et 9, caractérisé en ce que l'organe temporisateur (63) est incorporé dans le bouton (58).

11. Robinet mitigeur selon la revendication 8, caractérisé en ce que la mobilité en rotation du bouton (58) est limitée par des butées.

12. Robinet mitigeur selon la revendication 8, caractérisé en ce qu'il comprend, entre le bouton (58) et le poussoir (53) de la soupape pilote (51), un mécanisme bistable à levier et ressort, au moyen duquel la soupape pilote (51) est ouverte lorsqu'on appuie une première fois sur le bouton et au moyen duquel cette soupape est refermée lorsqu'on appuie une seconde fois sur le bouton.

Fig.1

EP 0 311 762 B1

Fig.2

Fig.3

Fig.4

8